Europäisches Patentamt

European Patent Office

Office européen des brevets

(19)

(11) Veröffentlichungsnummer: **0 294 381**
**B1**

(12)   **EUROPÄISCHE PATENTSCHRIFT**

(45) Veröffentlichungstag der Patentschrift: **18.07.90**

(51) Int. Cl.⁵: **E 04 H 15/18**

(21) Anmeldenummer: **87901482.7**

(22) Anmeldetag: **11.03.87**

(86) Internationale Anmeldenummer:
**PCT/EP87/00139**

(87) Internationale Veröffentlichungsnummer:
**WO 87/05653 24.09.87 Gazette 87/21**

(54) **SELBSTBAUZELT.**

(30) Priorität: **14.03.86 EP 86103470**

(43) Veröffentlichungstag der Anmeldung:
**14.12.88 Patentblatt 88/50**

(45) Bekanntmachung des Hinweises auf die
Patenterteilung:
**18.07.90 Patentblatt 90/29**

(84) Benannte Vertragsstaaten:
**AT BE CH DE FR GB IT LI NL SE**

(56) Entgegenhaltungen:
**FR-A-2 217 978**
**FR-A-2 330 829**
**FR-A-2 557 909**
**GB-A-1 313 155**
**NL-A-6 817 777**

(73) Patentinhaber: **Röder GmbH**
**Am Lautenstein**
**D-6470 Büdingen 7 (DE)**

(72) Erfinder: **RÖDER, Heinz**
**"Ausserhalb"**
**D-6470 Büdingen 7 (DE)**

(74) Vertreter: **Munderich, Paul, Dipl.-Ing.**
**Frankfurter Strasse 84**
**D-6466 Gründau-Rothenbergen (DE)**

Courier Press, Leamington Spa, England.

**Beschreibung**

Die Erfindung betrifft ein Selbstbauzelt, das auf einer fahr- bzw. roll- und abstützbaren Plattform von einer Transportstellung in eine Aufbaustellung verbringbar ist und aus einem teleskopierbaren Mast, sowie einer Mehrzahl Riegel besteht, wobei die gefaltete Dachhaut, im Bereich der Riegel zur Spannung beim Ausfahren und zumindest zur Unterstützung beim Einfahren, den vom Mast abgewandten Enden der Riegel verbunden ist.

Ein solches Zelt ist auch durch die FR—A—2330829 bekannt.

Grundsätzlich ist dabei vorgesehen, daß die rollund abstützbare Plattform ein im Rahmen der Straßenverkehrszulassungsordnung der einzelnen Länder oder im Rahmen der Sondergenehmigung zugelasener Tieflader ist, der fallweise auch als Sattelausleger ausbildbar ist.

Weitere Selbstbauzelte mit einer fahr- bzw. rollund abstützbaren Plattform, die durch eine oder nur geringe Zahl von Personen gemeinsam erstellt werden können, sind nicht bekannt.

Darüberhinaus sind Aluminium-Gerüstzelte in den verschiedensten Ausführungen bekannt, deren Erstellung jedoch in aller Regel nicht nur eine Mehrzahl von Personen benötigt, sondern darüberhinaus handwerkliche Kenntnisse in relativ hohem Umfang für das Baustellenpersonal voraussetzt.

Diese Zelte sind also nur bedingt als Selbstbauzelte zu bezeichnen.

Des weiteren sind im militärischen Rahmen auch Kleinzelte bekannt, die, in einzelne Traglasten verteilt, von einzelnen oder mehreren Personen erstellt werden können, wobei dieses selbstverständlich in gleichem Maße für Campingfreunde gilt.

Aus diesem Grund ist es Aufgabe dieser Erfindung, ein Selbstbauzelt nach der eingangs beschriebenen Art zu nennen, das bei kleinen Größen von nur einer Person erstellt werden kann und, bei Notwendigkeit der Erstellung eines größeren oder Großzeltes dieser Art, ein minimaler Personenbedarf benötigt wird.

Die erfindungsgemäße Lösung sieht vor, daß an dem Mast eine Mehrzahl teleskopierbarer und/oder ausfaltbarer Riegel über die in vorbestimmter Richtung und Neigung dem Mast angeordnete Grundglieder verbunden sind, und die jeweiligen Folgeglieder jedes Grundgliedes in diesen, in Transportstellung, eingebracht sind, wobei das letzte Folgeglied in ausgefahrenem bzw. ausgefaltetem Zustand der Riegel die Spannung der Dachhaut bestimmt, und

daß das jeweilige Endfolgeglied des Riegels mit einem zum Planum gerichteten Stiel mit diesem verbunden ist.

In die in vorbestimmter Richtung und Neigung am Mast angeordneten Grundglieder sind in Transportstellung die jeweiligen Folgeglieder eingeschoben oder, bei Verwendung ausfaltbarer Riegel, die Folgeglieder an diesen angeordnet.

Die teleskopier- oder einfalt- bzw. ausfaltbar gestalteten Endglieder der einzelnen Riegel bilden zusammen mit der gefalteten Dachhaut in Transportstellung einen als Kappe anzusprechenden Verbund.

In ausgefahrenem bzw. ausgefaltetem Zustands der Riegel bestimmt diese die Spannung der Dachhaut.

Die Stabilität des Gesamtzeltes wird durch die vorgesehene Abstützung jedes Endfolgegliedes des Riegels mit einem zum Planum gerichteten und mit diesem verbundenen Stiel wesentlich gesteigert, da die aufzunehmenden Kräfte nicht nur von der fahr- bzw. roll- und abstützbaren Plattform aufgenommen werden müssen.

Es ist festzuhalten, daß diese Lösung der Aufgabenstellung gerecht wird.

Im weiteren ist zu bemerken, daß die Stiele so ausgebildet sind, daß sie senkrecht abschließende Markisen tragen.

Dadurch wird der zugfreie Abschluß des Zeltes im Bodenbereich gefördert.

Als Weiterbildung wird vermerkt, daß zur Sicherung der Teleskopabschnitte des Mastes und der Riegel gegen Verdrehung diese durch die Wahl prismatischer Querschnitte für die ineinandergreifenden Abschnitte gegeben ist.

Diese Ausbildung der Teleskopzüge gegen Verdrehung beinhaltet eine sichere und einfache Lösung dieses Problems, da sie keine Querschittsschwächung, wie bei zylindrischen Teleskopzügen durch die jeweils notwendige Einbringung eines in einer Nut geführten Keiles bedingt.

Zur Formgebung des Zeltes ist auszuführen, daß die Formgebung des Grundrisses durch die Anzahl der am Mast angeordneten Riegel und von deren Länge bestimmt ist, und

daß, bei Verwendung von ungleich langen, im wesentlichen nach einer Richtung weisenden Länge der Riegel,

das Zentrum der Riegelanlenkung außerhalb des Schwerpunktes, jedoch innerhalb der Plattform, liegt.

Selbstverständlich gilt diese Forderung nur insoweit, als die durch die Stiele abgestützten Riegel eine weitergehende Verlagerung des Schwerpunktes nicht aufnehmen können.

Obwohl den teleskopierbar ausgebildeten Riegeln im allgemeinen der Vorzug vor den ausfaltbaren gegeben werden muß, kann, ausfaltbaren Riegeln vorgesehen werden, daß einzelne, aus ausfaltbaren Gliedern bestehende Riegel ihrem am Mast angeordneten Grundglied gelenkig verbunden und in verschiedenen Einstellungen rastbar sind.

Damit wird eine große Vielseitigkeit hinsichtlich der Verbindung mit anderen Bauten oder weiteren Selbstbauzelten erreicht.

So kann z.B. vorgesehen werden, daß die Riegel eines zweiten Zeltes dieser Art mit dem zuvor genannten Zelt an dessen Riegelspitzen zu einem Doppelzelt verbindbar sind, wobei eine im wesentlichen horizontale Einstellung der zu verbindenden Riegel vorgesehen ist.

Abschließend darf zusammenfassend nochmals darauf hingewiesen werden, daß beim Einfahren der Riegel die Faltung des Zeltdaches durch die Verbindung mit den Endgliedern unterstützt wird, wobei eine weitere Verbindung der Dachhaut mit den Endbereichen der anderen Riegelglieder jedes Riegels, beim Einfahren, deren ausreichend exakte Faltung gestattet.

Im weiteren ist noch zu bemerken, daß der eingefahrene Teleskopmast einschließlich dr eingefahrenen bzw. eingefalteten Riegelabschnitte zusammen mit der Dachhaut in Transportstellung eine quasi geschlossene Transporteinheit bildet, deren Abmessungen in den im Rahmen der Straßenverkehrszulassung in der Regel gegebenen allgemeinen Grenzen gehalten werden können. Lediglich die Stiele und Markisen sind als "Bypack" der Plattform zuzuordnen ode aber auch separat zu transportieren.

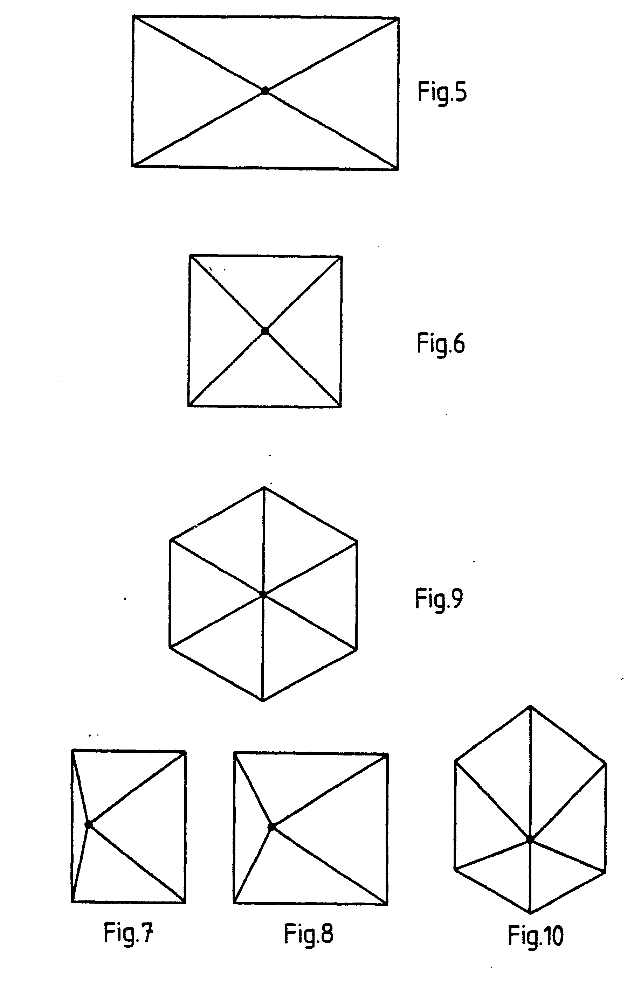

Der Erfindungsgegenstand wird durch die beigefügten Zeichnungen einer beispielsweisen Ausführungsform durch die Figuren 1 bis 4 näher erläutert. Die Figuren 5 bis 10 zeigen Beispiele projizierter Grundrißformen.

Figur 1 zeigt das Selbstbauzelt in eingefahrener Transportposition, jedoch mit bereits ausgefahrenen Abstützungen und in Verbindung damit, darüberliegend durch Bezugslinien verdeutlicht, die den teleskopierten Riegeln verbundene Dachhaut.

Figur 2 zeigt ein Selbstbauzelt mit teleskopiertem Tragmast und partiell teleskopierten Riegeln, die mit der nach oben weisenden Fläche der Riegel verbundene Dachhaut ist ebenfalls, gemäß dem gestrichelten Umriß, ausgezogen.

Figur 3 zeigt das vollständig aufgebaute Zelt nach den Figuren 1 und 2, mit in der Projecktion quadratischen Grundriß der Dachhaut.

Figur 4 zeigt eine Einzelheit aus Figur 1.

Figur 5 bis 10 zeigen Beispiele möglicher projizierter Grundrißformen, d.h. bei zentaler Betrachtung von oben auf die Dachhaut, wobei Figur 5 eine Rechteckform, Figur 6 eine Quadratform, Figur 7 und 8 die Form bei ungleich langen Dachriegeln, die in Richtung der Riegelkürzung eine Verschiebung der Mastlage im Grundriß bedingen, Figur 9 zeigt die Grundrißform eines symmetrischen Polygons (Sechseck) und Figur 10 die Grundrißform eines asymmetrischen Polygons.

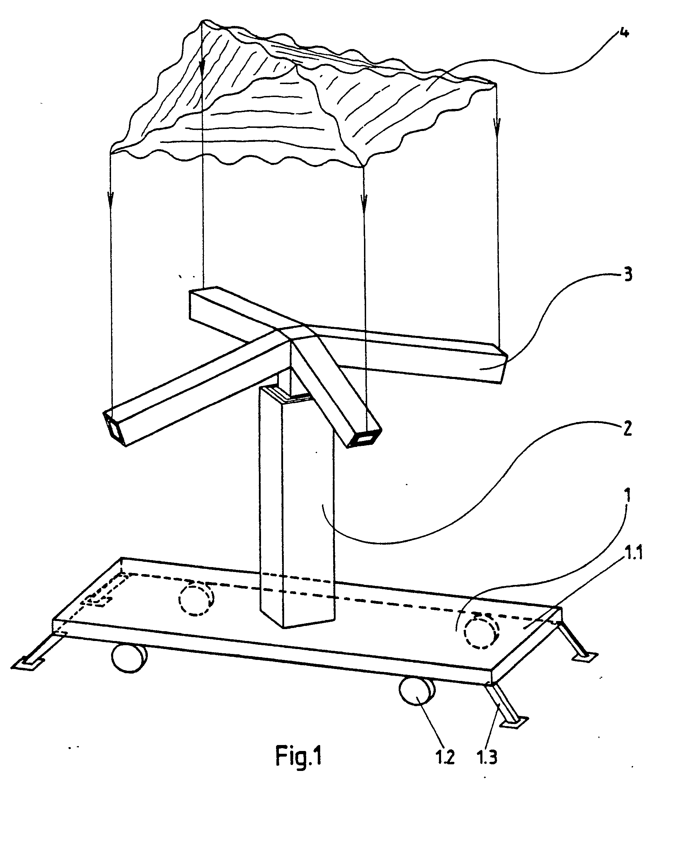

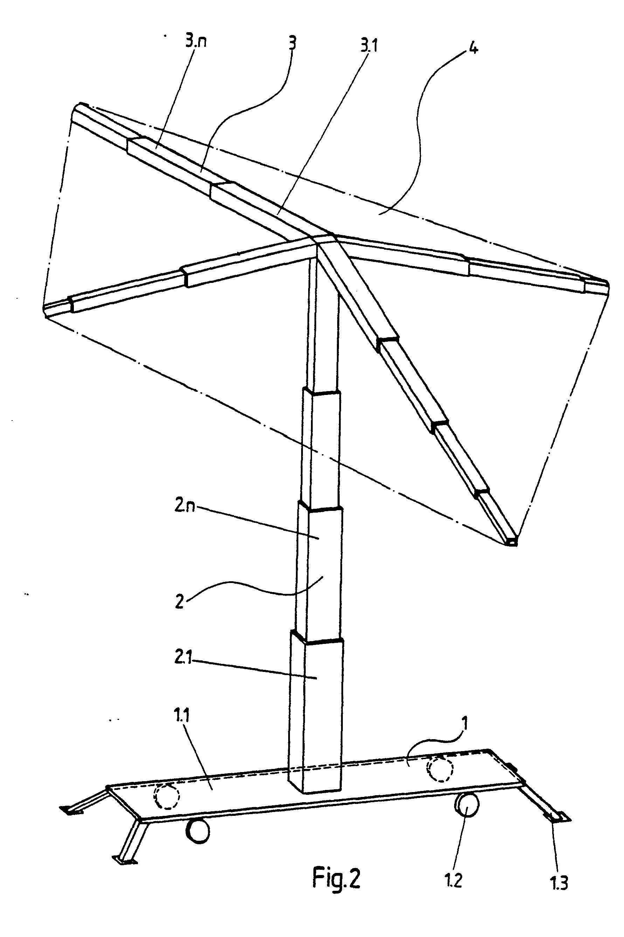

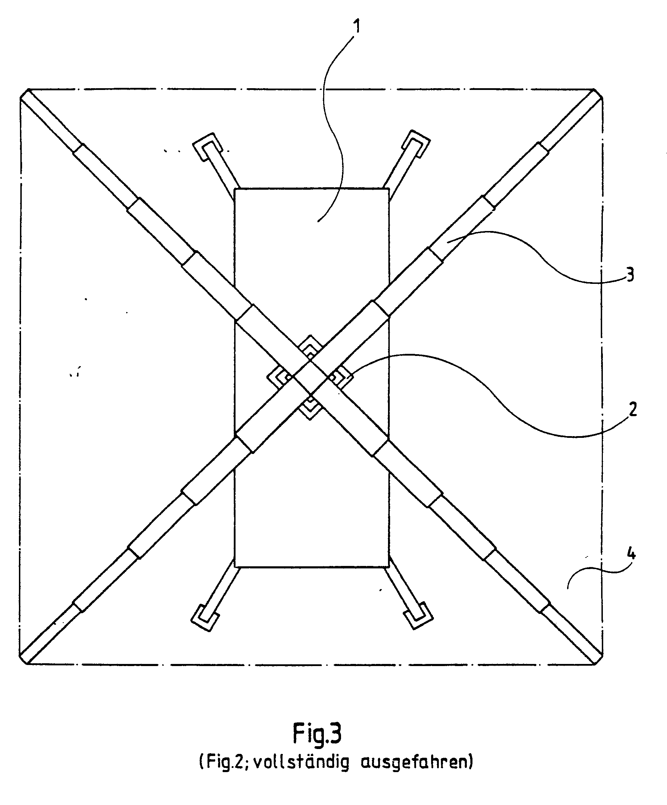

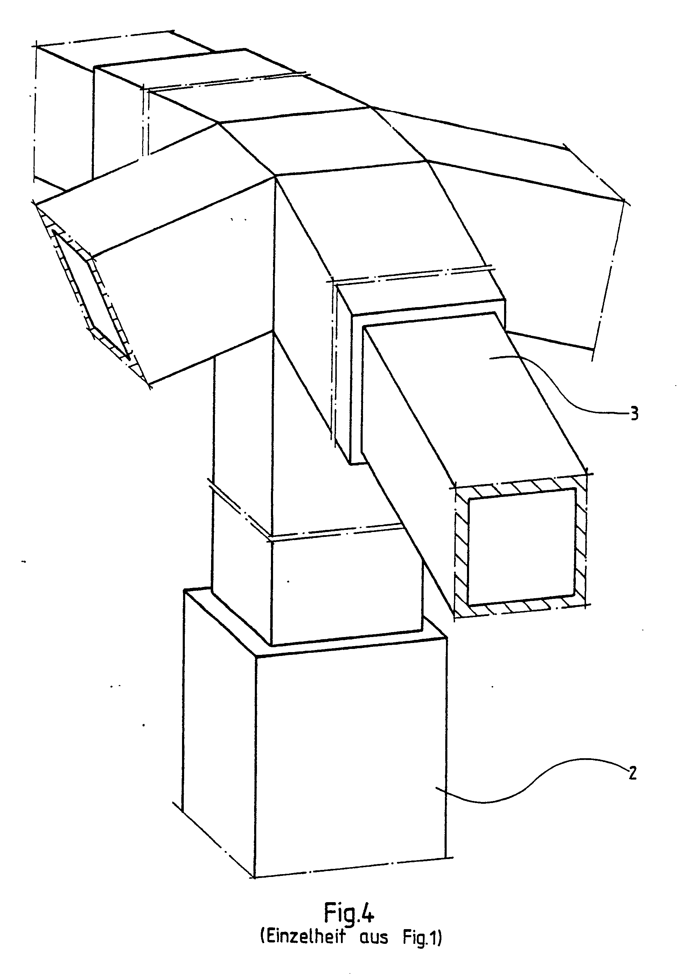

Überleitend zu den Figuren 1 bis 4 darf im einzelnen festegehalten werden:

Die fahr- und abstützbare Plattform besteht aus der eigentlichen Plattform 1.1, den Rädern oder Rollen 1.2 sowie den Stützen 1.3. Die abstützbare Plattform kann dabei ein für den Straßenverkehr zugelassener Tieflader sein. Dem Schwerpunkt der Plattform 1 ist der teleskopierbare Tragmast 3 mit seinem Grundglied 2.1 senkrecht verbunden, wobei in das Grundglied die Folgeglieder 2n eingefahren sind. Der Querschnitt des Mastes ist prismatisch, wobei, im Falle dieses Beispieles, ein quadratischer Grundquerschnitt gewählt wurde.

Dem letzen Folgeglied 2n, d.h. im Endbereich des Tragmastes 2, sind die Grundriegel 3.1 der teleskopierbaren Riegel in vorbestimmter Richtung und Neigung verbunden, und die jeweiligen weiteren Folgeglieder 3n jedes Grundgliedes in diesen, in Transportstellung, eingebracht, wobei das jeweils letzte Folgeglied 3n in ausgefahrenem Zustand den Riegel 3 die Spannung der Dacchaut 4 des Zeltes bestimmt. Beim Einfahren ist die Verbindung mit dem Endbereich jedes Gliedes 3n für eine befriedigende selbsttätige Faltung erforderlich. Die Dimensionierung des Grundgliedes 2.1 des Tragmastes 2 erfolgt in aller Regel bei Berücksichtigung der Höhe der Plattform 1.1 und des durch den in eingefahrener Stellung der Riegel gegebenen Überstand über das Grundglied 2.1 hinaus bei praktisch voller Nutzung der durch die Straßenverkehrsordnung zugelassenen Gesamthöhe.

Dasselbe gilt auch für die Grundlieder 3.1 der Riegel 3, die in eingefahrenem Zustand eine solche Länge aufweisen, daß diese unter Berücksichtigung ihrer Lage bei Addition von je 2 Grundriegellängen die zulässige Breite nach der Vorschrift nicht überschreitet.

Wie bereits eingangs erwähnt, sind der Teleskopmast 2 und die Riegel wahlweise durch hydraulische oder pneumatische und/oder mechanische Mittel ein und ausfahrbar.

Diese Mittel sind im Hinblick auf der Variationsfähigkeit der Antriebe und der Grundformen hier im einzelnen nicht weiter diskutiert, da sie, auch in Verbindung mit dem Erfindungsgegenstand, Stand der Technik sind.

Des weiteren muß noch erwähnt werden, daß in ausgefahrener Stellung der Riegel 3 diese fallweise durch zum Planum gerichtete Stützen zusätzlich gesichert werden können, und das Zelt durch eine von Stütze zu Stütze führende Bespannung abgeschlossen werden kann.

Aus eine zeichnerische Darstellung dieser Maßnahmen wurde ebenfalls verzichtet, da sie allgemein bekannt sind.

**Patentansprüche**

1. Selbstbauzelt, das auf einer fahr- bzw. rollund abstützbaren Plattform (1) von einer Transportstellung in eine Aufbaustellung verbringbar ist und aus einem teleskopierbaren Mast (2), sowie einer Mehrzahl Riegel (3) besteht, wobei die gefaltete Dachhaut (4), im Bereich der Riegel (3) zur Spannung beim Ausfahren und zumindest zur Unterstützung beim Einfahren, dem vom Mast (2) abgewandten Enden der Riegel (3) verbunden ist, dadurch gekennzeichnet,

daß an dem Mast (2) eine Mehrzahl teleskopierbarer und/oder ausfaltbarer Riegel (3) über die in vorbestimmter Richtung und Neigung dem Mast (2) angeordnete Grundglieder (3.1) verbunden sind, und die jeweiligen Folgeglieder (3.n) jedes Grundgliedes (3.1) in diesen, in Transportstellung, eingebracht sind, wobei das letzte Folgeglied (3.n) in ausgefahrenem bzw. ausgefgaltetem Zustand der Riegel (3) die Spannung der Dachhaut (4) bestimmt, und

daß das jeweilige Endfolgeglied (3.n) des Riegels (3) mit einem zum Planum gerichteten Stiel mit diesem verbunden ist.

2. Selbstbauzelt nach Anspruch 1, dadurch gekennzeichnet, daß die Stiele senkrecht abschließende Markisen tragen.

3. Selbstbauzelt nach Anspruch 1, dadurch gekennzeichnet, daß zur Sicherung der Teleskopabschnitte (2.1/2.n) und (3.1/3.n) des Mastes und der Riegel gegen Verdrehung diese durch die Wahl primsatischer Querschnitte für die ineinandergreifenden Abschnitte gegeben ist;

4. Selbstbauzelt nach Anspruch 1, dadurch gekennzeichnet, daß die Formgebung des Grundrisses durch die Anzahlt der am Mast (2) angeordneten Riegel (3) von deren Länge bestimmt ist, und daß, bei Verwendung von ungleich langen, im wesentlichen nach einer Richtung weisenden Länge der Riegel (3), das Zentrum der Riegelanlenkung außerhalb des Schwerpunktes, jedoch innerhalb der Plattform (1), liegt.

5. Selbstbauzelt nach Anspruch 1, dadurch gekennzeichnet, daß einzelne, aus ausfaltbaren Gliedern (3.n) bestehende Riegel (3) ihrem am Mast (2) angeordneten Grundglied (3.1) gelenkig verbunden und in verschiedenen Einstellungen rastbar sind.

6. Selbstbauzelt nach Anspruch 1 und 5, dadurch gekennzeichnet, daß die Riegel (3) eines zweiten Zeltes dieser Art mit dem genannten Zelt an dessen Riegelspitzen zu einem Doppelzelt verbindbar sind, wobei eine im wesentlichen horizontale Einstellung der zu verbindenden Riegel (3) vorgesehen ist.

**Revendications**

1. Tente à montage automatique pouvant être amenée d'une position de transport à une position de montage sur une plate-forme (1) que l'on peut déplacer ou faire rouler, respectivement, et que l'on peut faire reposer sur des appuis, et composée d'un mât télescopique (2), ainsi que d'une pluralité de bras (3), la toile pliée de toit (4) étant reliée aux extrémités des bras (3) qui sont opposées au mât (2) en vue de la tendre dans la région de bras (3) lots de leur extension et au moins de la supporter lors de leur réreaction, caractérisée par le fait qu'une pluralité de bras (3), télescopiques et/ou dépliables, dont reliés au mât (2) par les éléments de base (3.1) qui sont reliés au mât (2) avec une direction et une inclinaison prédéterminées, les éléments (3.n) qui suivent à chaque fois chaque élément de base (3.1) étant introduits dans celui-ci dans la position de transport, et le dernier élément suivant (3.n) déterminant la tension de la toile du toit (4) dans l'état étendu ou, respectivement, déplié des bras (3), et par le fait que chaque dernier élément (3.n) du bras (3) est relié au sol par un montant dirigé vers celui-ci.

2. Tente à montage automatique selon la revendication 1, caractérisée par le fait que les montants portent des stores de fermeture verticale.

3. Tente à montage automatique selon la revendication 1, caractérisée par le fait que les éléments télescopiques (2.1/2.n et 3.1/3.n) du mât et des bras sont empêchés de tourner grâce au choix de sections transversales prismatiques pour les éléments qui s'emboîtent les uns dans les autres.

4. Tente à montage automatique selon la revendication 1, caractérisée par le fait que la forme donnée à sa projection horizontale par la pluralité des bras (3) montés sur le mât (2) est déterminée par la longueur de ceux-ci, et par le fait que, par l'utilisation de bras (3) de longueurs inégales dirigés pour l'essentiel vers une direction, le centre de l'articulation des bras est situé à l'extérieur du centre de gravité, mais à l'intérieur de la plate-forme (1).

5. Tente à montage automatique selon la revendication 1, caractérisée par le fait que des bras individuels (3) composés d'élément dépliables (3.n) sont reliés de manière articulée à leur élément de base (3.1) monté sur le mât (2), et qu'ils peuvent être encliquetés dans diverses positions.

6. Tente à montage automatique selon la revendication 1 et 5, caractérisée par le fait que les bras (3) d'une deuxième tents de ce genre peuvant être reliés à ladite tente sur les extrémités des bras de celle-ci pour former une tente double, cependant qu'il est prévu un réglage pour l'essentiel horizontal des bras (3) à relier.

**Claims**

1. A self-erecting tent which, on a portable, rollable or supportable platform (1), can be placed from a position of transportation into a position of erection, with the said tent comprising a telescoping pole (2) and a plurality of bolts (3), with the folded roof sheathing (4), in the area of the said bolts (3), for tensioning during withdrawal and at least for supporting during retraction, being connected to the ends of the bolts (3) facing away from the pole (2), characterized in that a plurality of telescoping and/or unfoldable bolts (3), through the basic elements (3.1) located in a predetermined direction and at a predetermined angle on pole (2), are connected to the pole (2), and the respective follower members (3.n) of each basic element (3.1), in the position of transportation, are incorporated thereinto, with the ultimate follower member (3.n), in the withdrawn or unfolded condition of the bolts (3), determining the tension of the roof sheathing (4), and that the respectively final follower member (3.n) of the bolt (3) is connected to a handle directed toward the awning.

2. A self-erecting tent according to claim 1, characterized in that the handles carry vertically closing sun-blinds,

3. A self-erecting tent according to claim 1, characterized in that locking of the telescopic sections (2.1/2.n) and (3.1/3.n) of the pole and of the bolts is insured by the selection of prismatic cross-sections for the meshing sections.

4. A self-erecting tent according to claim 1, characterized in that the shaping of the plan is determined by the number of the bolts (3) disposed on the pole (2), through the length thereof, and that when using bolts (3) of varying length substantially pointing to one direction, the center of the bolt hinging is outside the center of gravity bit within the platform (1).

5. A self-erecting tent according to claim 1, characterized in that individual bolts (3) composed of unfoldable members (3.n) are pivotally connected to their basic member (3.1) located on pole (2), and are lockable in various adjustable positions.

6. A self-erecting tent according to claims 1 to 5, characterized in that the bolts (3) of a second tent of this type can be connected to the said tent at the bolt tips thereof to form a dual tent, with a substantially horizontal adjustable position of the bolts (3) to be connected being provided.

EP 0 294 381 B1

Fig.1

EP 0 294 381 B1

Fig. 2

2

Fig.3
(Fig.2; vollständig ausgefahren)

Fig.4
(Einzelheit aus Fig.1)

Fig.5

Fig.6

Fig.9

Fig.7

Fig.8

Fig.10